# EUROPEAN PATENT APPLICATION

(11) **EP 3 758 422 A1**
(43) Date of publication of application: **30.12.2020**
(21) Application number: 18907190.5
(22) Date of filing: 31.12.2018
(51) Int. Cl.: H04W 52/24, H04W 16/28, H04W 84/12, H04W 88/08

(54) **COMMUNICATION DEVICE AND COMMUNICATION METHOD**

(30) Priority: 21.02.2018 JP 2018029234
(71) Applicant: Sony Corporation, 108-0075 Tokyo (JP)
(72) Inventor: SUGAYA, Shigeru, Tokyo 108-0075 (JP)
(74) Representative: D Young & Co LLP
(86) International application number: PCT/JP2018/048627
(87) International publication number: WO 2019/163302

(57) **Abstract**

Provided is a communication apparatus and a communication method that form an extended service set group from a plurality of basic service sets.

The communication apparatus functioning as an access point includes a communication section, a control section, a detection section, and a determination section. The communication section sends and receives signals. The control section controls the transmission and reception of the signals. The detection section detects external signals. The determination section determines a position in an extended service set on the basis of detection results of the external signals. The control section controls setting of communication parameters in its own basic service set on the basis of the determined position and makes a notification of position information of the communication apparatus itself within the extended service set and of the communication parameters to a subordinate terminal.

## Description

### [Technical Field]

The technology disclosed in the present specification relates to a communication apparatus and a communication method that form an extended service set group from a plurality of basic service sets.

### [Background Art]

As wireless LAN (Local Area Network) systems typified by IEEE802.11 have become pervasive, exchange of various types of information by installing wireless networks in homes is becoming common.

Recent years have seen application equipment such as smartphones connectable to the Internet via public wireless communication networks, allowing such equipment to function as access points (APs). This ensures that an individual can connect to an Internet network through a plurality of routes in addition to Internet connection via a communication network connected to his or her personal computer.

As described above, as the number of pieces of equipment that can function as access points increases, it becomes possible to expand a wireless LAN network range in a certain space such as inside of a home, for example, by connecting a plurality of access points. Specifically, one can form an extended service set (ESS) group that includes a plurality of basic service sets (BSSes), including an access point, by connecting a plurality of his or her access points in a wired manner.

Also, the advance of wireless LAN technology has made commercially feasible a technology for sending signals with the least necessary level of transmission power by controlling transmission power between an access point and its subordinate terminals that are included in a BSS. This technology narrows a reach range of BSS radio waves used in wireless LANs, thus contributing to improved frequency utilization efficiency. Further, it is possible to control the reach range of radio waves of wireless LAN access points by controlling a directivity of radio waves to be sent, for example, in combination with an adaptive array antenna.

Here, in a case where a plurality of access points is registered as a group to build a large extended service set (ESS), time and effort is required to specify, in advance and artificially, to what extent access points are grouped together.

Also, recent years have seen systems that accommodate a number of terminals by connecting a plurality of access points installed in a wide space such as a stadium or public facility as a large network (ESS).

In order to build an ESS, it is necessary to artificially connect the plurality of access points, for example, with Ethernet (registered trademark) cables and to set, for each access point, an ESS identifier that identifies that the access point belongs to the same group.

Alternatively, in a case where an ESS is formed automatically without performing an artificial setting as described above, the network range must be restricted. For example, in a case where a closed system is formed within a building, it is necessary to identify that system. For this reason, the ESS range must be identified.

Also, although a wireless LAN access point can narrow its BSS range by setting transmission power control (as described above), it is difficult to determine whether or not the BSS is susceptible or resilient to external interference signal impacts.

For example, a proposal has been made regarding a wireless communication apparatus that determines whether or not it is located indoors or outdoors by using an external signal such as radio waves emitted from a satellite and disables its functions of a frequency band that can be used only indoors in a case where the apparatus determines that it is located outdoors (see, for example, PTL 1). However, this wireless communication apparatus can receive radio waves from a satellite inside a building that includes a material having excellent radio wave signal transmittance such as wooden building or near openings of a wooden building such as by windows, thus leaving a possibility that the apparatus may determine that it is located outdoors. Also, this wireless communication apparatus needs to make determination by using position information in tandem with map information in order to determine more accurately whether or not it is located indoors or outdoors.

Recent years have seen establishment of a technology that contributes to improved frequency utilization efficiency as access points perform transmission power control by not carrying out transmission beyond their necessary ranges. However, potential risks of information eavesdropping cannot be eliminated in the case of inadvertent transmission with the maximum transmission power due to leakage of a transmission signal to the outside (e.g., outside the building).

### [Citation List]

### [Patent Literature]

[PTL 1]
Japanese Patent Laid-Open No. 2015-35741

### [Summary]

### [Technical Problem]

In a case where an extended service set (ESS) network is built by using a plurality of access points, it is necessary to find out a positional relation between these access points in the ESS.

For example, an access point installed by a window may be subject to external interference. As a result, it is necessary to identify that the access point is located at a peripheral part of the ESS. In a BSS at a peripheral part of the ESS, the access point needs to be operated in such a manner as not to be subject to external interference, and it is necessary to control the reach range of BSS radio waves by using transmission power control and a directional antenna.

In the light of the foregoing, it is an object of the technology disclosed in the present specification to provide a communication apparatus and a communication method that allow to find out the positional relation between access points in an ESS.

### [Solution to Problem]

The disclosure of the present specification has been devised in consideration of the above problem, and a first aspect thereof is a communication apparatus that includes:
a communication section adapted to send and receive signals;
a control section adapted to control transmission and reception of the signals;
a detection section adapted to detect external signals; and
a determination section adapted to determine a position in an extended service set on the basis of detection results of the external signals, in which
the control section controls setting of communication parameters in its own basic service set on the basis of the determined position.

The detection section detects, as the external signal, at least one of different kinds of signals, i.e., signals from positioning satellites, signals from public communication networks, radio and television broadcasting signals, signals from communication apparatuses not belonging to the extended service set, or signals from apparatuses that emit signals in the same frequency band as wireless LAN systems. Also, the determination section determines whether or not the communication apparatus is located at a central or peripheral part of the extended service set, and the control section controls transmission power, transmission directivity, and a coding and modulation scheme in accordance with the communication apparatus of the extended service set.

Also, the communication apparatus according to the first aspect functions as an access point and makes a notification, to other communication apparatuses, information regarding the position of the communication apparatus itself in the extended service set and the communication parameters.

Also, a second aspect of the technology disclosed in the present specification is a communication method that includes:
a detection step of detecting external signals;
a determination step of determining a position in an extended service set on the basis of detection results of the external signals; and
a step of controlling setting of communication parameters in its own basic service set on the basis of the determined position.

Also, a third aspect of the technology disclosed in the present specification is a communication apparatus that includes:
a communication section adapted to send and receive signals to and from an access point;
an extraction section adapted to extract, from the signal received from the access point, information regarding an extended service set in which the access point participates; and
a control section adapted to control transmission and reception of the signals by the communication section on the basis of the extracted information.

The extraction section extracts, from the signal received from the access point, position information of the access point in the extended service set and information regarding communication parameters in the basic service set of the access point such as transmission power, transmission directivity, and a coding scheme or a modulation scheme.

Also, the control section controls selection of a destination for association, the transmission power, and the coding or modulation scheme on the basis of the position information of the access point in the extended service set.

Further, a fourth aspect of the technology disclosed in the present specification is a communication method that includes:
a reception step of receiving signals from an access point;
an extraction step of extracting, from the signal received from the access point, information regarding an extended service set in which the access point participates; and
a control step of controlling transmission and reception of the signals on the basis of the extracted information.

### [Advantageous Effects of Invention]

The technology disclosed in the present specification provides a communication apparatus and a communication method that carry out transmission power control and antenna directivity control by finding out a positional relation between access points in an ESS.

It should be noted that the effects described in the present specification are merely illustrative and that effects of the present invention are not limited thereto. Also, the present invention may bring about further additional effects in addition to the above effect.

Still other objects, features, and advantages of the technology disclosed in the present specification will become apparent from detailed description based on embodiments described later and attached drawings.

### [Brief Description of Drawings]

[FIG. 1]

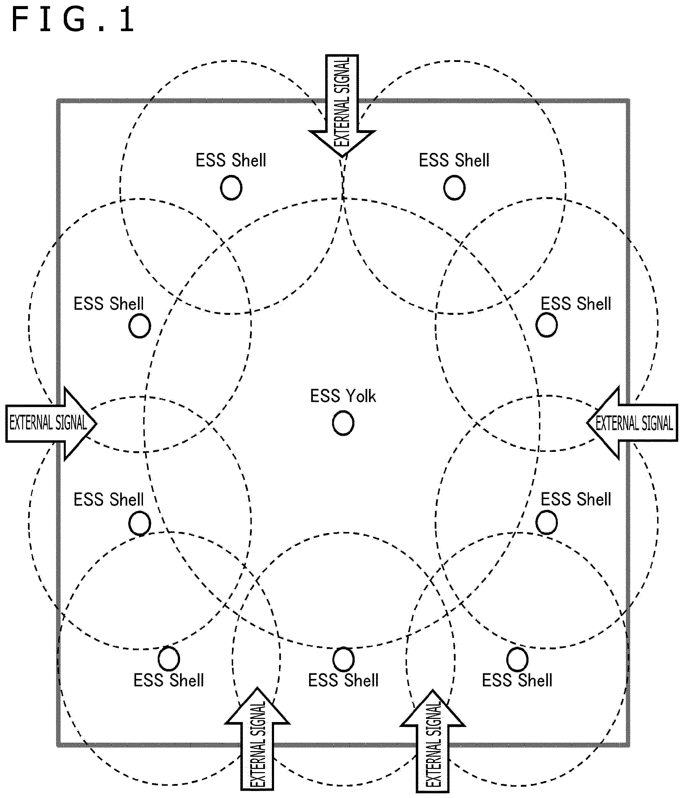

   FIG. 1 is a diagram schematically illustrating an example of an access point layout in a wireless LAN system to which the technology disclosed in the present specification is applied.
[FIG. 2]

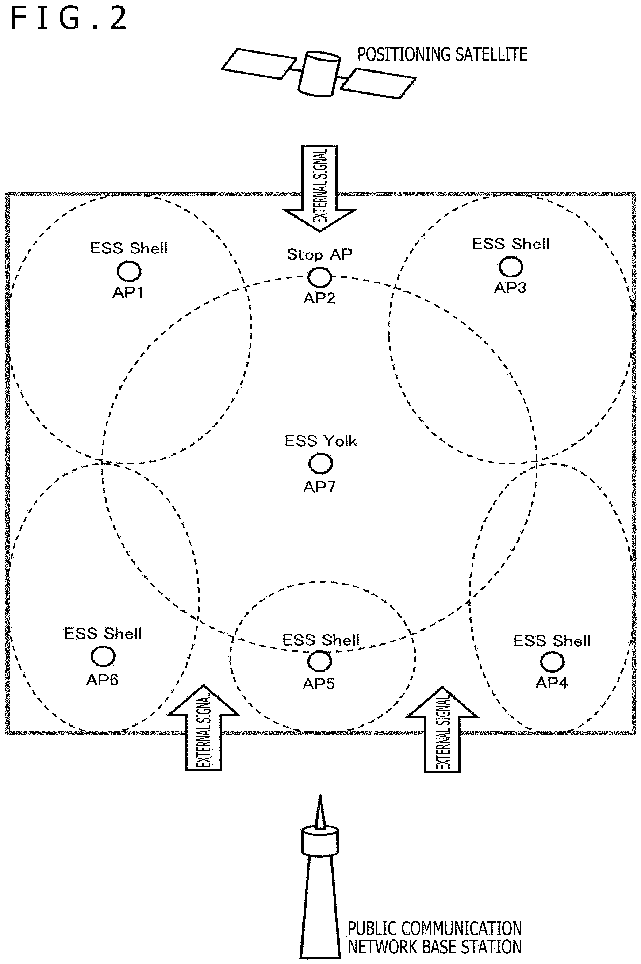

   FIG. 2 is a diagram illustrating another example of an access point layout in the wireless LAN system to which the technology disclosed in the present specification is applied.
[FIG. 3]

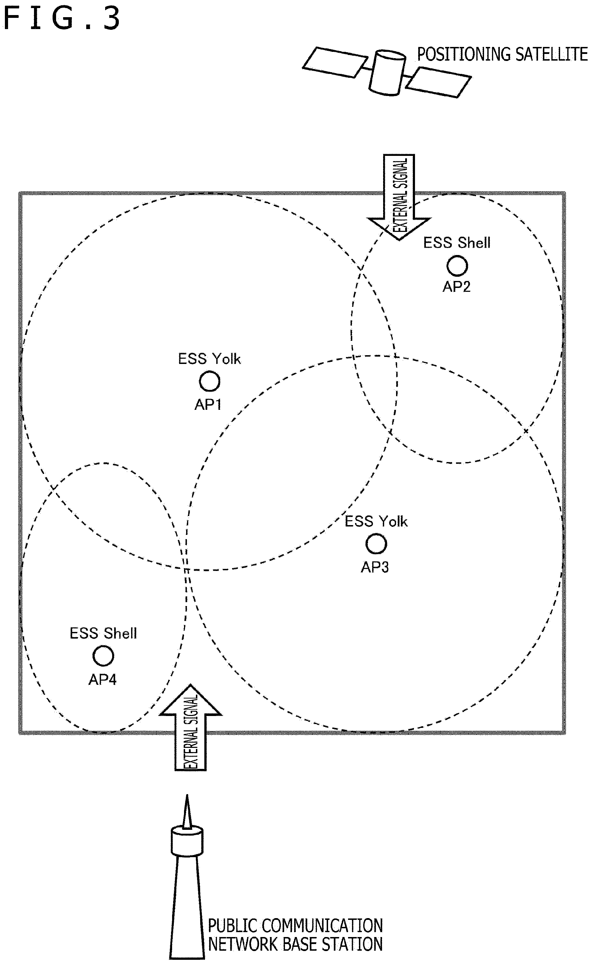

   FIG. 3 is a diagram illustrating still another example of an access point layout in the wireless LAN system to which the technology disclosed in the present specification is applied.
[FIG. 4]

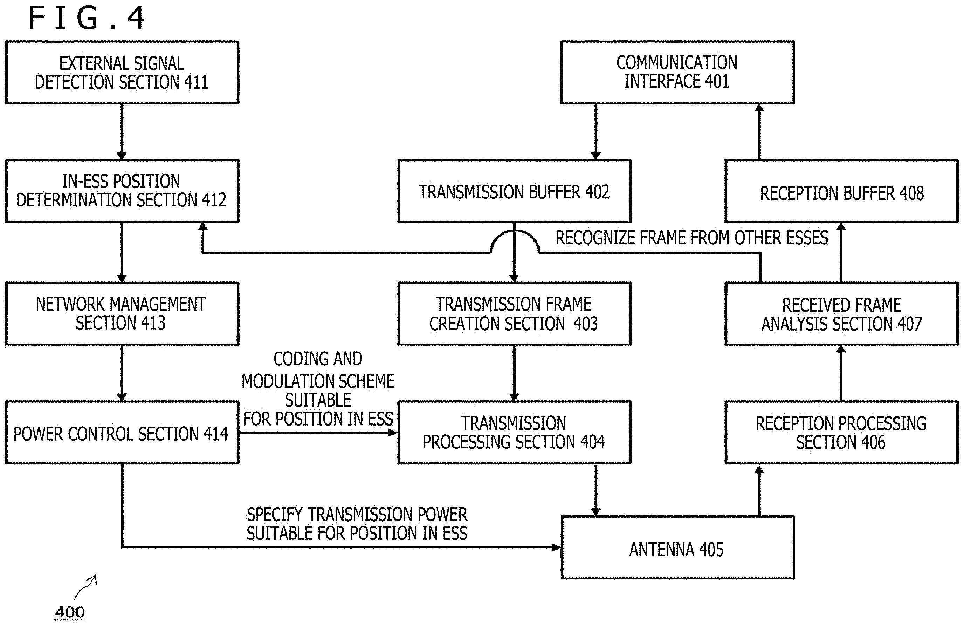

   FIG. 4 is a diagram illustrating a configuration example of a wireless communication apparatus 400 that functions as an access point.
[FIG. 5]

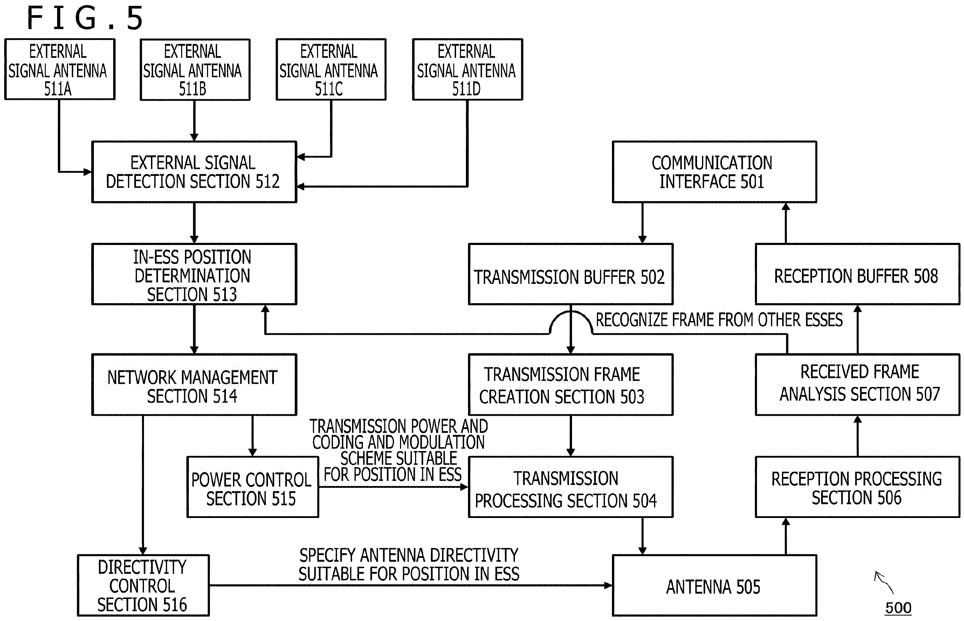

   FIG. 5 is a diagram illustrating a configuration example of a wireless communication apparatus 500 that functions as an access point.
[FIG. 6]

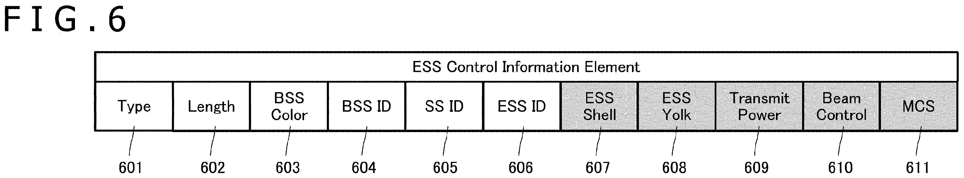

   FIG. 6 is a diagram illustrating a configuration of an ESS control information element.
[FIG. 7]

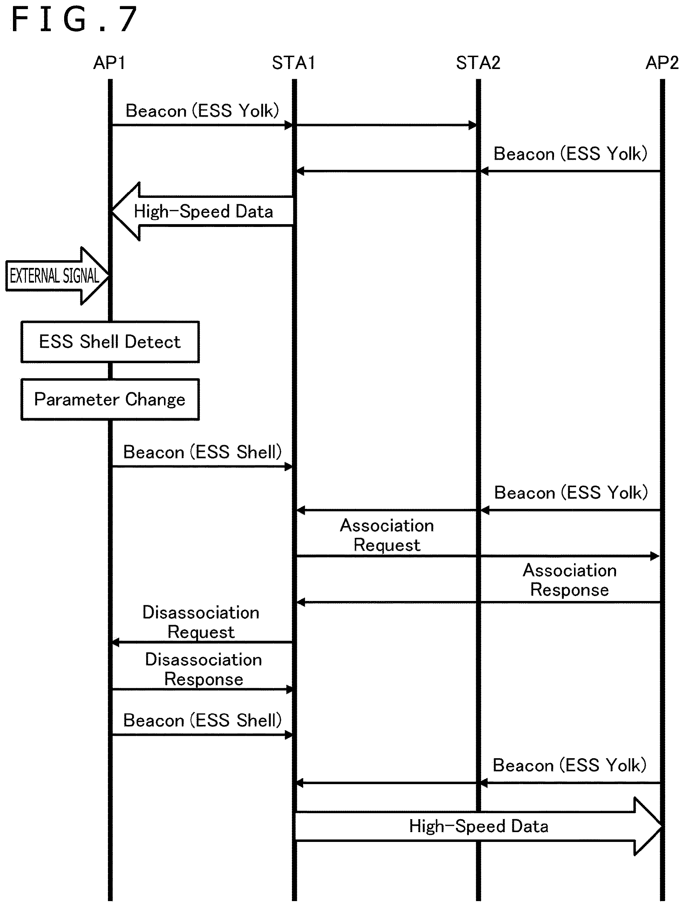

   FIG. 7 is a diagram illustrating an example of a communication sequence within a BSS that participates in an ESS.
[FIG. 8]

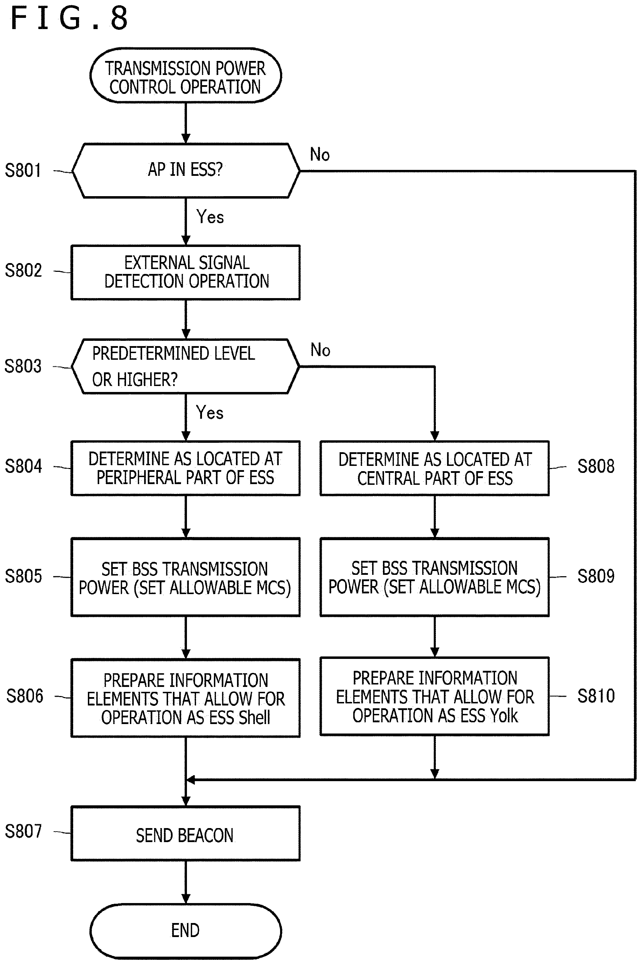

   FIG. 8 is a flowchart illustrating a processing procedure for an access point to carry out transmission power control.
[FIG. 9]

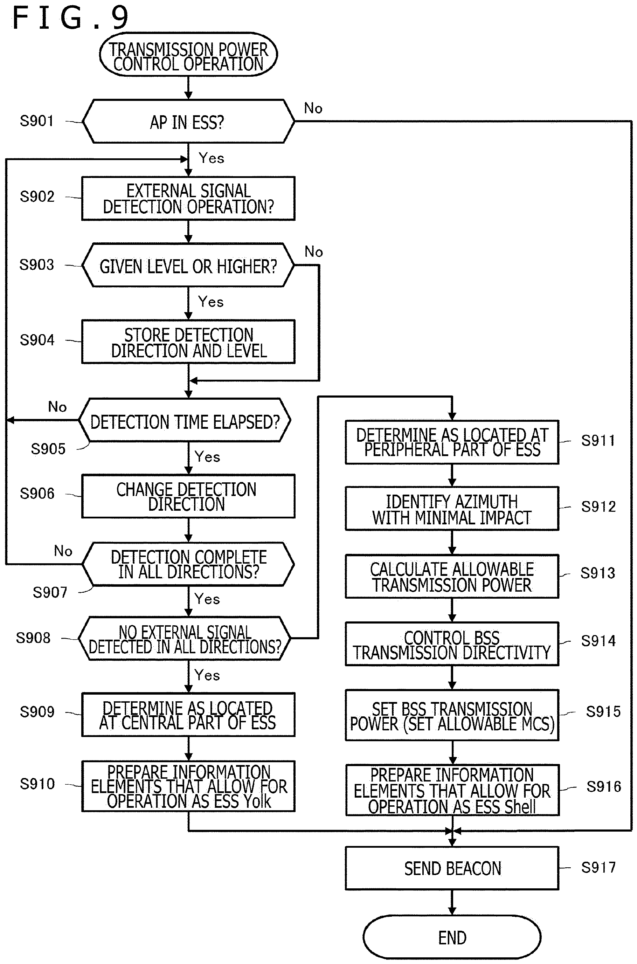

   FIG. 9 is a flowchart illustrating a processing procedure for an access point to carry out transmission power control and antenna directivity control.
[FIG. 10]

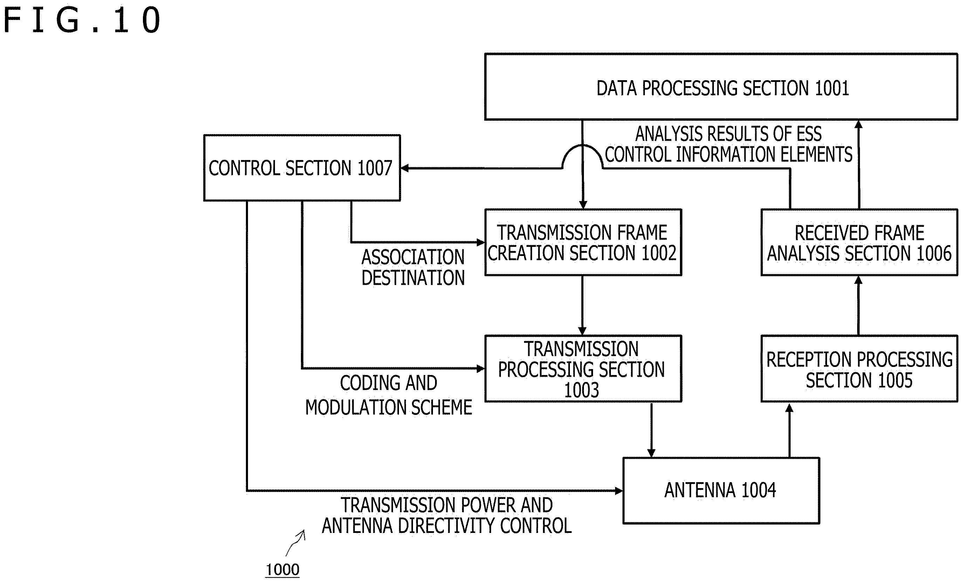

   FIG. 10 is a diagram illustrating a configuration example of a wireless communication apparatus 1000 that functions as a subordinate terminal of an access point.
[FIG. 11]

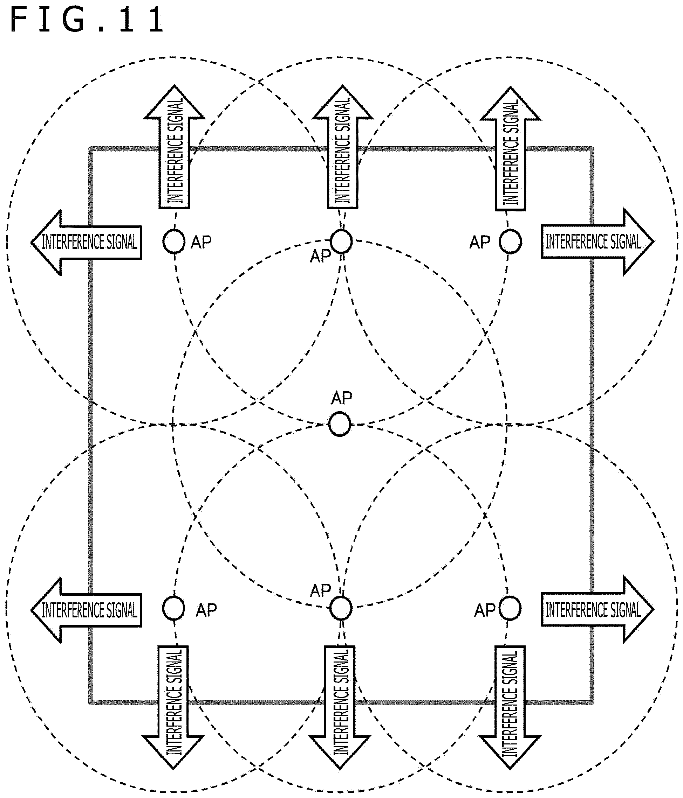

   FIG. 11 is a diagram schematically illustrating an example of an access point layout in a conventional wireless LAN system.
[FIG. 12]

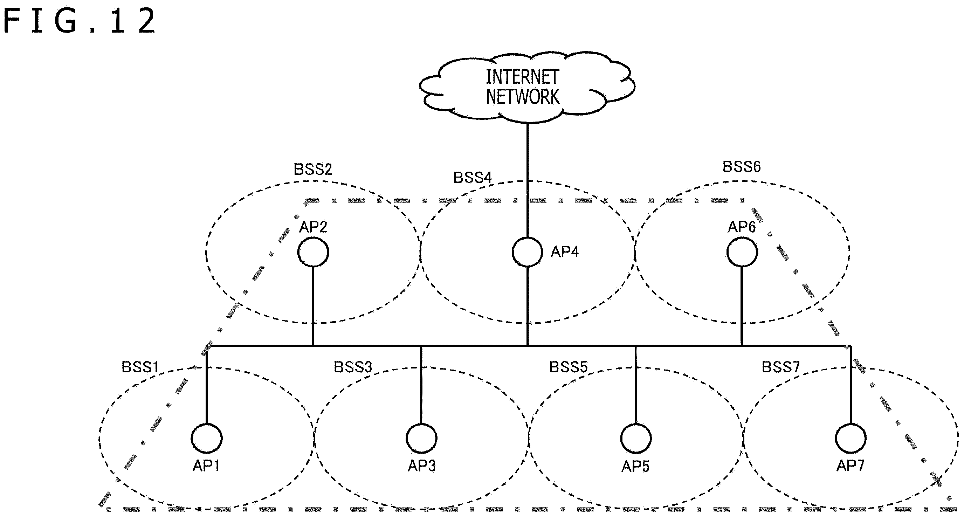

   FIG. 12 is a diagram schematically illustrating a configuration example of an ESS.

### [Description of Embodiment]

A detailed description will be given below of embodiments of the technology disclosed in the present specification with reference to drawings.

The present specification proposes below a technology for suitably controlling transmission power by finding out a positional relation between wireless LAN access points in an ESS when the access points function as the ESS.

The technology disclosed in the present specification makes it possible to effectively find out that a communication apparatus such as an access point is located at a peripheral part of the ESS, on the basis of detection results of signals from outdoor base stations of external wireless communication systems and those from positioning satellites such as GPS (Global Positioning System).

Then, the technology disclosed in the present specification allows for an access point to reduce or suppress interference caused to other external systems by carrying out control to reduce transmission power in its own BSS when it is detected that the access point is located in a BSS at a peripheral part of the ESS.

Also, the technology disclosed in the present specification ensures, within a BSS located at a peripheral part of the ESS, improved confidentiality of information exchanged within the ESS by carrying out control to reduce the transmission power and suppressing leakage of signal from the ESS to a malicious apparatus existing outside the ESS (in vicinity of the ESS border). Alternatively, a BSS located at a central part of the ESS can exchange secure data thanks to a low likelihood of access point signal leakage to the outside.

Also, the technology disclosed in the present specification allows for a communication apparatus such as access point to identify a direction of arrival of an external signal on the basis of reception statuses of a plurality of external antennas that receives signals from the outside. Then, the communication apparatus can manage the BSS in such a manner as to reduce likelihood of causing interference to the outside by eliminating (or suppressing) the directivity of a transmission signal toward the direction of arrival of an external signal.

Also, the technology disclosed in the present specification allows for a communication apparatus such as access point to connect its subordinate terminals more stably by operating without reducing its transmission power thanks to low interference caused to other external systems when it is detected that the communication apparatus is located in the BSS at a central part of the ESS.

Also, the technology disclosed in the present specification allows for a communication apparatus such as access point to achieve improved throughput by using a modulation or coding scheme with a higher transmission rate within the BSS thanks to its position that is not susceptible to external impacts when it is detected that the communication apparatus is located in the BSS at a central part of the ESS. Alternatively, the technology recommends the use of a more reliable modulation scheme within the BSS to manage the BSS under stable operation when it is detected that the communication apparatus is located in the BSS at a peripheral part of the ESS due to a high likelihood of interference from the outside.

Also, the technology disclosed in the present specification allows for a terminal (STA) connected to the ESS to realize more stable and faster transmission by preferentially connecting to an access point located at a central part of the ESS rather than an access point that is located at a peripheral part of the ESS and that is, therefore, susceptible to external interference (in other words, an access point that operates unstably).

FIG. 11 schematically illustrates an example of an access point layout in a conventional wireless LAN system.

In FIG. 11, a plurality of access points (APs) is provided within a predetermined space enclosed in a bold rectangle. The bold lines correspond, for example, to wall surfaces of buildings.

Also, each circle drawn by a broken line indicates the radio wave reach range of the AP located at the center thereof. The APs are small circles drawn by solid lines at the centers of the broken line circles. Each AP forms a BSS that includes one or a plurality of STAs (not illustrated) located within its own radio wave reach range.

As the plurality of the APs provided in a predetermined space is connected, for example, with Ethernet (registered trademark) cables or other types of cables, an ESS is formed as a group of access points in the same group, and further, seamless Internet access is provided to the STAs located in that space.

In the example illustrated in FIG. 11, we do not assume that each AP controls its transmission power or antenna directivity. Therefore, all APs have circles with a uniform radius as their radio wave reach ranges. Also, we assume that the wall surface of the building (or the boundary of the predetermined space) illustrated in bold includes a material having excellent radio wave signal transmittance such as wooden building. Therefore, when reaching the building wall surface, radio waves sent from an AP penetrate through the wall surface almost in an as-is condition and leak to the outside without being reflected or absorbed, thus constituting an interference signal to the outside. That is, the BSS range formed by each AP illustrated in broken line reaches beyond and outside the predetermined space enclosed by a bold line in the form of an interference signal.

Also, FIG. 12 schematically illustrates a configuration example of an ESS.

A plurality of access points AP1 to AP7 is connected, for example, via Ethernet (registered trademark) cables or other type of cables. Also, the access point AP4 connected to an Internet network functions as a gateway.

Also, each access point drawn with a solid line as a small circle is connected to terminals (not depicted) within the radio wave reach range illustrated by a broken line circle (ellipse), thus forming a BSS.

That is, the AP1, the AP2, the AP3, the AP4, the AP5, the AP6, and the AP7 can accommodate terminals (not depicted) within the ranges of BSS1, BSS2, BSS3, BSS4, BSS5, BSS6, and BSS7, respectively, and each AP can be connected to an Internet network via the AP4.

As described above, a group of the plurality of access points AP1 to AP7 combines their individual basic service sets BSS1 to BSS7 and is connected to an Internet network as an extended service set. It can also be considered that a large network formed as an ESS includes a set of small BSSes.

It should be noted that the rectangle (trapezoid) illustrated by a one-dot chain line corresponds to the predetermined space in FIG. 12. The ranges of the basic service sets BSS1 to BSS7 formed by the respective access points AP1 to AP7 illustrated by dotted lines reach beyond and outside the predetermined space enclosed by a bold line in the form of an interference signal. For example, in a case where an ESS is formed within a predetermined space such as in a home, it is necessary to investigate the layout of the access points in such a manner as to suitably cover that range.

FIG. 1 is a diagram schematically illustrating an example of an access point (or BSS) layout in a wireless LAN system to which the technology disclosed in the present specification is applied.

In FIG. 1, a plurality of access points (APs) is provided in a predetermined space enclosed in a bold rectangle. The bold lines correspond, for example, to wall surfaces of buildings. Also, each circle drawn by a broken line indicates the radio wave reach range of the access point located at the center thereof. The access points are small circles drawn by solid lines at the centers of the broken line circles. Each access point forms a BSS that includes one or a plurality of STAs (not illustrated) located within its own radio wave reach range.

In the example illustrated in FIG. 1, we assume that each access point controls its transmission power in such a manner as to prevent interference signals from traveling beyond the predetermined space to the extent possible. That is, the wireless LAN system illustrated keeps signal leakage from the predetermined space to a minimum as the access points located at peripheral parts of an ESS set their BSS ranges small by adjusting transmission power.

Specifically, the access point located at a central part of the ESS (or the predetermined space) operates with predetermined maximum transmission power as an ESS Yolk (ESS center) and has a large radio wave reach range, thus allowing the access point to form a large BSS. On the other hand, the access points located at peripheral parts of the ESS operate with suppressed transmission power and reduce their radio wave reach ranges as ESS Shell (ESS periphery), thus causing these access points to form small BSSes. This suppresses signal leakage to the outside of the predetermined range.

As illustrated in FIG. 1, in order to form an ESS that fits into the size and shape of the predetermined space by controlling its transmission power and adjusting its radio wave reach range (BSS sizes), each access point needs to find out whether or not it is located at a central part of the ESS or at a peripheral part thereof (in other words, its positional relation in the ESS).

In the example illustrated in FIG. 1, each access point determines whether or not it is located at a central part of the ESS or at a peripheral part thereof (its positional relation in the ESS) on the basis of detection statuses of incoming signals from radio wave transmission sources existing outside of the predetermined space.

That is, in a case where an access point detects external signals or intense external signals (whose levels exceed a predetermined level), the access point determines that it is located at a peripheral part of the ESS. Such an access point suppresses its transmission power and functions as an ESS shell. Also, an access point may, at the same time, change its transmission parameters within the BSS such as switching to a coding and modulation scheme more resistant to interference caused by external signals.

Also, in a case where an access point does not detect any external signal at all or detects only a feeble external signal (whose level is lower than a predetermined level), the access point determines that it is located at a central part of the ESS. Then, such an access point operates with its predetermined maximum transmission power to function as an ESS Yolk.

Among examples of external signals, as the term is used here, are signals from positioning satellites such as GPS, signals from base stations of public communication networks such as mobile phone network, signals from radio and television broadcasting stations, signals from radar and other equipment, signals from access points not belonging to the extended service set (ESS) to which the access point belongs or transmission signals to these APs, and signals from apparatuses that emit signals in the same frequency band as wireless LAN systems (the same applies hereinafter). It should be noted, however, that these are merely illustrative and that various signals arriving from sources other than the extended service set to which the access point belongs may be used to identify the position within the ESS. Also, in a case where the plurality of the external signals is detected, the access point may determine whether or not it is located at a peripheral part or at a central part of the ESS as a result of a comprehensive determination.

It should be noted that in a case where the access points form an ESS by simply adjusting their radio wave reach ranges (i.e., BSS ranges), an attempt to cover a predetermined space will require a large number of access points that function as small ESS shells.

For this reason, the number of access points that function as ESS shells may be reduced through not only transmission power control but also antenna directivity control performed and the radio wave reach ranges of the BSS adjusted by each access point.

FIG. 2 schematically illustrates another example of an access point layout in the wireless LAN system to which the technology disclosed in the present specification is applied. In the example illustrated in FIG. 2, we assume that each access point controls not only its transmission power but also its antenna directivity in such a manner as to prevent interference signals from traveling beyond the predetermined space to the extent possible.

In FIG. 2, a plurality of access points (APs) is provided in a predetermined space enclosed in a bold rectangle. The bold lines correspond, for example, to wall surfaces of buildings. Also, each circle or ellipse drawn by a broken line indicates the radio wave reach range of the access point located at the center thereof. The access points are small circles drawn by solid lines at the centers of the broken line circles or ellipse. Each access point forms a BSS that includes one or a plurality of STAs (not illustrated) located within its own radio wave reach range.

Transmission control alone performed by an access point causes its almost circular radio wave reach range (BSS) to be adjusted in size. In contrast, not only transmission control but also antenna directivity control performed by an access point change the shape of its radio wave reach range (BSS) such that a main lobe points to the inside of the predetermined space and that a back lobe points to the outside of the predetermined space (radio wave reach ranges (BSSes) are illustrated as ellipses in FIG. 2 for simplification of drawings). In the wireless LAN system illustrated in FIG. 2, therefore, the access points located at peripheral parts of an ESS adjust not only their transmission power but also their antenna directivity at the same time and, in doing so, set the areas of their BSSes that stick out of the predetermined space small, thus keeping signal leakage from the predetermined space to a minimum.

The access points AP1 to AP7 in the wireless LAN system illustrated in FIG. 2 control their transmission power and antenna directivity, respectively, on the basis of detection statuses of external signals.

Specifically, the AP7 located at a central part of the ESS (or the predetermined space) does not detect any external signal at all or detects only a feeble external signal. Therefore, the AP7 operates with predetermined maximum transmission power to function as an ESS Yolk (ESS center) and does not control its antenna directivity, thus holding a large radio wave reach range and forming a large BSS.

On the other hand, each access point of the AP1, the AP3, the AP4, and the AP6 located at peripheral parts of the ESS determines that it is an ESS shell located at a peripheral part of the ESS because of the detection of external signals and controls its antenna directivity such that the main lobe points to the direction where no external signal is detected. The reason for this is that the direction where no external signal is detected is presumably the direction toward the inside of the predetermined space. Therefore, the main lobes of the respective radio wave reach ranges (BSSes) of the AP1, the AP3, the AP4, and the AP6 point to the inside of the predetermined space.

Also, the AP5 located at a peripheral part of the ESS operates with transmission power suppressed to the extent possible in such a manner as to prevent interference signals from traveling beyond the predetermined space because of the detection of external signals from a plurality of directions (two directions in the example illustrated in FIG. 2). Therefore, the AP5 forms a small BSS.

It should be noted that the AP1, the AP3, the AP4, the AP5, and the AP6 may, at the same time, change their transmission parameters within their own BSSes such as changing to a coding and modulation scheme more resistant to interference caused by external signals.

Also, the AP2 located at a peripheral part of the ESS stops functioning as an access point because it is located where an extremely intense external signal is detected. The reason for this is that, because of its position in proximity to the boundary of the predetermined space, the transmission of a signal will presumably change the signal into an interference signal traveling beyond the predetermined space.

As is obvious from FIG. 2, each access point controls not only its transmission power but also its antenna directivity, thus allowing for utmost reduction in signal leakage from the predetermined space. Also, as compared to the running as illustrated in FIG. 1 in which each access point controls only its transmission power, the running as illustrated in FIG. 2 in which each access point controls not only its transmission power but also its antenna directivity allows for coverage of the predetermined space with layout of fewer access points.

FIG. 3 schematically illustrates still another example of an access point (or BSS) layout in the wireless LAN system to which the technology disclosed in the present specification is applied. In the example illustrated in FIG. 3, we also assume that each access point controls not only its transmission power but also its antenna directivity in such a manner as to prevent interference signals from traveling beyond the predetermined space to the extent possible.

In FIG. 3, a plurality of access points (APs) is provided in a predetermined space enclosed in a bold rectangle. The bold lines correspond, for example, to wall surfaces of buildings. Also, each circle or ellipse drawn by a broken line indicates the radio wave reach range of the access point located at the center thereof. The access points are small circles drawn by solid lines at the centers of the broken line circles or ellipses. Each access point forms a BSS that includes one or a plurality of STAs (not illustrated) located within its own radio wave reach range.

Not only transmission control but also antenna directivity control performed by an access point change the shape of the radio wave reach range (BSS) thereof such that the main lobe points to the inside of the predetermined space and that the back lobe points to the outside of the predetermined space. In the wireless LAN system illustrated in FIG. 3, therefore, the access points located at peripheral parts of an ESS adjust not only their transmission power but also their antenna directivity at the same time and, in doing so, set the areas of their BSSes that stick out of the predetermined space small, thus keeping signal leakage from the predetermined space to a minimum (same as above).

The access points AP1 to AP4 in the wireless LAN system illustrated in FIG. 3 control their transmission power and antenna directivity, respectively, on the basis of detection statuses of external signals.

Specifically, although not located at a central part of the ESS (or the predetermined space), each of the access points AP1 and AP3 is permitted to operate with predetermined maximum transmission power as an ESS Yolk (ESS center) because it does not detect any external signal at all or detects only a feeble external signal. Therefore, these access points operate without controlling their antenna directivity, thus holding large radio wave reach ranges and forming large BSSes.

On the other hand, each of the access points AP2 and AP4 located outside of the ESS determines that it is located at a peripheral part of the ESS because of the detection of an external signal and controls its antenna directivity such that the main lobe points to the direction where no external signal is detected. The reason for this is that the direction where no external signal is detected is presumably the direction toward the inside of the predetermined space. Therefore, the main lobes of the respective radio wave reach ranges (BSSes) of the AP2 and the AP4 point to the inside of the predetermined space.

It should be noted that the AP2 and the AP4 may, at the same time, change their communication parameters within the BSS such as switching to a coding and modulation scheme more resistant to interference caused by external signals.

Therefore, in the wireless LAN system illustrated in FIG. 3, although, in a case where an external signal is detected, an access point functions as an ESS shell, in a case where no external signal is detected (irrespective of whether or not the access point is located at a peripheral part or at a central part of the ESS), the access point is permitted to function as an ESS Yolk, thus allowing a plurality of access points to operate effectively. Also, the running of the ESS in which each access point controls its transmission power and antenna directivity in accordance with detection statuses of external signals ensures coverage of the predetermined space with fewer access points.

FIG. 4 illustrates a configuration example of a wireless communication apparatus 400. The wireless communication apparatus 400 illustrated can function as an access point and form an ESS group together with BSSes that include other access points and further has a function to determine its position within the ESS in accordance with detection statuses of external signals. The wireless communication apparatus 400 can function as an access point, for example, in the wireless LAN system illustrated in FIG. 1.

The wireless communication apparatus 400 includes a communication interface 401, a transmission buffer 402, a transmission frame creation section 403, a transmission processing section 404, an antenna 405, a reception processing section 406, a received frame analysis section 407, and a reception buffer 408 to provide functions corresponding to those of conventional wireless LAN access points. It should be noted that the antenna 405 is included in a main body of the wireless communication apparatus 400 in some cases and is attached externally to the main body of the wireless communication apparatus 400 in other cases.

The communication interface 401 is connected to an Internet network or a local network via a wired cable such as an Ethernet (registered trademark) cable. The transmission buffer 402 stores data to be sent that has been received via the communication interface 401. The transmission frame creation section 403 creates data to be sent as a predetermined wireless frame (e.g., MAC (Media Access Control) frame). The transmission processing section 404 wirelessly sends a transmission frame via the antenna 405 in accordance with a predetermined access control procedure. The transmission processing section 404 also carries out processes such as coding, modulation, analog conversion, and upconversion of the transmission data to the RF (radio frequency) band.

The reception processing section 406 carries out processes such as downconversion, digital conversion, and demodulation of the received signal via the antenna 405, and further decodes the signal as a predetermined frame (e.g., MAC frame). The received frame analysis section 407 analyzes the parameters included in the received frame. The reception buffer 408 temporarily stores the received data. Thereafter, the received data stored in the reception buffer 408 is sent to the Internet network or the local network via the communication interface 401.

It should be noted that the received frame analysis section 407 may analyze whether or not the signal is sent from the communication apparatus included in its own ESS on the basis of information included in the received frame such as BSSID information and ESSID information and recognize the signal as an external signal in a case where the signal is sent from a communication apparatus not included in its own ESS.

Also, the wireless communication apparatus 400 further includes an external signal detection section 411, an in-ESS position determination section 412, a network management section 413, and a power control section 414 to function as an access point in the wireless LAN system illustrated in FIG. 1.

The external signal detection section 411 detects external signals arriving from outside of the ESS to which the wireless communication apparatus 400 belongs as an access point. The term "external signals" here refers to signals from positioning satellites such as GPS, signals from public communication networks such as mobile phone network, signals from radio and television broadcasting stations, signals from radar and other equipment, signals from access points not belonging to the extended service set (ESS) to which the wireless communication apparatus 400 belongs or transmission signals to these access points, and signals from apparatuses that emit signals in the same frequency band as wireless LAN systems. For example, frames recognized by the received frame analysis section 407 as frames sent from communication apparatuses not included in the ESS to which the wireless communication apparatus 400 belongs may also be detected as external signals.

The in-ESS position determination section 412 determines the position of the wireless communication apparatus 400 within the ESS in accordance with detection statuses such as reception levels of external signals detected by the external signal detection section 411.

It should be noted that there is no need to decode all signals detected by the external signal detection section 411 in order for the in-ESS position determination section 412 to determine the position. That is, it is sufficient if signal levels can be detected in the frequency channel used by the wireless communication apparatus 400 itself for signal transmission.

The network management section 413 manages the wireless network (BSS) of the wireless communication apparatus 400 itself in order for the wireless communication apparatus 400 to function as an access point.

The power control section 414 controls the transmission power with which to send a frame via the antenna 405. Also, the power control section 414 controls the transmission power with which to send a frame in accordance with the position of the wireless communication apparatus 400 within the ESS determined by the in-ESS position determination section 412. Specifically, in a case where it is determined that the wireless communication apparatus 400 is an ESS Yolk (ESS center), the power control section 414 performs control such that the frame is sent with predetermined maximum transmission power. On the other hand, in a case where it is determined that the wireless communication apparatus 400 is an ESS shell (ESS periphery), the power control section 414 performs control such that the frame is sent with suppressed transmission power to match with the detected levels of the external signals.

It should be noted that in a case where it is determined that the wireless communication apparatus 400 is an ESS Yolk (ESS center), the power control section 414 may instruct the transmission processing section 404 to switch to a coding and modulation scheme more resistant to interference caused by external signals.

FIG. 5 illustrates another configuration example of a wireless communication apparatus 500. The wireless communication apparatus 500 illustrated can function as an access point and form an ESS group together with BSSes that include other access points and further has a function to determine its position within the ESS in accordance with detection statuses of external signals. The wireless communication apparatus 500 can function as an access point, for example, in each of the wireless LAN systems illustrated in Figs. 1 to 3.

The wireless communication apparatus 500 includes a communication interface 501, a transmission buffer 502, a transmission frame creation section 503, a transmission processing section 504, an antenna 505, a reception processing section 506, a received frame analysis section 507, and a reception buffer 508 to provide functions correspond to those of conventional wireless LAN access points. These sections have similar functions to those of the components of the wireless communication apparatus 400 under the same names respectively as illustrated in FIG. 4, and a detailed description thereof will be omitted here.

The wireless communication apparatus 500 includes a plurality of external signal antennas 511A to 511D capable of receiving external signals. Although four external signal antennas are provided in FIG. 5, two to three or five or more antennas may be provided. Each of the external signal antennas 511A to 511D is included in the main body of the wireless communication apparatus 500 in some cases and is attached externally to the main body of the wireless communication apparatus 500 in other cases.

Also, the wireless communication apparatus 500 further includes an external signal detection section 512, an in-ESS position determination section 513, a network management section 514, a power control section 515, and a directivity control section 516 to function as an access point in the wireless LAN systems illustrated in Figs. 1 to 3.

The external signal detection section 512 detects external signals arriving from outside of the ESS to which the wireless communication apparatus 500 belongs as an access point. The meaning of the term "external signals" used here is similar to that described above. It should be noted, however, that the external signal detection section 512 can detect, from signals received by the plurality of external signal antennas 511A to 511D, not only reception levels of external signals but also their directions of arrival.

The in-ESS position determination section 513 determines the position of the wireless communication apparatus 500 within the ESS in accordance with detection statuses such as reception levels of external signals detected by the external signal detection section 512. It should be noted that the in-ESS position determination section 513 can determine not only whether or not the wireless communication apparatus 500 is located at a central or peripheral part of the ESS but also, in a case where the wireless communication apparatus 500 is located at a peripheral part of the ESS, the direction toward the outside of the ESS (or the direction toward the central part of the ESS) on the basis of the direction of arrival of the received signal.

It should be noted that there is no need to decode all signals detected by the external signal detection section 512 in order for the in-ESS position determination section 513 to determine the position. That is, it is sufficient if signal levels can be detected in the frequency channel used by the wireless communication apparatus 500 itself for signal transmission.

The network management section 514 manages the wireless network (BSS) of the wireless communication apparatus 500 itself in order for the wireless communication apparatus 500 to function as an access point.

The power control section 515 controls the transmission power with which to send a frame via the antenna 505. Also, the power control section 515 controls the transmission power with which to send a frame in accordance with the position of the wireless communication apparatus 500 within the ESS determined by the in-ESS position determination section 513. Specifically, in a case where it is determined that the wireless communication apparatus 500 is an ESS Yolk (ESS center), the power control section 515 performs control such that the frame is sent with predetermined maximum transmission power. On the other hand, in a case where it is determined that the wireless communication apparatus 500 is an ESS shell (ESS periphery), the power control section 515 performs control such that the frame is sent with suppressed transmission power to match with the detected levels of the external signals.

It should be noted that in a case where it is determined that the wireless communication apparatus 500 is an ESS Yolk (ESS center), the power control section 515 may instruct the transmission processing section 504 to switch to a coding and modulation scheme more resistant to interference caused by external signals.

The directivity control section 516 controls the directivity of a frame to be sent via the antenna 505. Also, the directivity control section 516 controls the transmission power with which to send a frame on the basis of the directions of arrival of the external signals detected by the external signal detection section 512. Specifically, in a case where the in-ESS position determination section 513 determines that the wireless communication apparatus 500 is an ESS shell (ESS periphery), the directivity control section 516 controls the antenna directivity such that the main lobe points to the direction where no external signal is detected (or such that the back lobe points to the direction where an external signal is detected). The reason for this is that the direction where no external signal is detected is presumably the direction toward the inside of the predetermined space.

The access point may make a notification of control information suitable for its position within the ESS, for example, to subordinate terminals to ensure proper operation of its own wireless network (BSS).

FIG. 6 illustrates a configuration example of an ESS control information element used by an access point to make a notification of information suitable for its position within the ESS.

An ESS control information element has fields or flags denoted respectively by reference numerals 601 to 611.

A Type field 601 includes information indicating the type of this information element. A Length field 602 includes information indicating the information length of this information element. A BSS Color field 603 includes a BSS color that identifies color information used by the access point. A BSS ID field 604 includes a BSS ID that includes an access point MAC address. An SS ID field 605 includes an SS ID, the service set identifier of the access point. An ESS ID field 606 includes an ESS ID, the identifier of the extended service set to which the access point belongs.

When it is determined that the access point is located at a peripheral part of the ESS on the basis of detection statuses of external signals, "1" is written to an ESS Shell flag 607. Also, when it is determined that the access point is located at a central part of the ESS on the basis of detection statuses of external signals, "1" is written to an ESS Yolk flag 608.

A Transmit Power field 609 includes information regarding the transmission power of the access point BSS. In a case where it is determined that the access point is an ESS shell, the access point determines the BSS transmission power in accordance with reception levels of external signals detected and so on. Also, in a case where it is determined that the access point is an ESS Yolk, the access point sets the transmission power to a predetermined maximum level.

A Beam Control field 610 includes control information regarding the antenna directivity of the access point BSS. In a case where it is determined that the access point is an ESS shell, the access point controls the antenna directivity on the basis of the directions of arrival of the external signals detected. Also, in a case where it is determined that the access point is an ESS Yolk or in a case where an extremely intense signal is detected, the access point does not particularly control its antenna directivity.

An MCS (Modulation and Coding Scheme) field 611 includes information specifying the coding and modulation scheme of the access point BSS. The access point uses this field 611 in a case where it is determined that the access point is an ESS shell and in a case where an instruction is given to switch to a coding and modulation scheme more resistant to interference caused by external signals (permissible MCS range) concurrently with transmission power control and antenna directivity control. It should be noted, however, that in a case where no change is made to the coding and modulation scheme in accordance with the position within the ESS, there is no need to provide this field 611 in the ESS control information element.

The access point may add an ESS control information element as illustrated in FIG. 6 to a management frame such as a beacon frame, association frame, probe frame, or action frame and send the frame to the terminals in the vicinity thereof. Alternatively, this ESS control information element may be added to a control frame such as ACK frame or to a data frame rather than a management frame.

FIG. 10 illustrates a configuration example of a wireless communication apparatus 1000 that functions as a subordinate terminal of an access point. The wireless communication apparatus 1000 illustrated is mainly characterized in that it controls communication operation within the BSS of the access point with which the wireless communication apparatus 1000 is associated or switches its association to other access point on the basis of contents of the ESS control information element (refer to FIG. 6) received from the access point.

The wireless communication apparatus 1000 includes a data processing section 1001, a transmission frame creation section 1002, a transmission processing section 1003, an antenna 1004, a reception processing section 1005, and a received frame analysis section 1006 to provide functions correspond to those of conventional wireless LAN access points. It should be noted that the antenna 1004 is included in the main body of the wireless communication apparatus 1000 in some cases and is attached externally to the main body of the wireless communication apparatus 1000 in other cases.

The data processing section 1001 exchanges data to be sent and received with a protocol's upper layer (not illustrated). The transmission frame creation section 1002 creates data to be sent as a predetermined wireless frame (e.g., MAC frame). The transmission processing section 1003 wirelessly sends a transmission frame via the antenna 1004 in accordance with a predetermined access control procedure. The transmission processing section 1004 also performs processes such as coding, modulation, analog conversion, and upconversion of the transmission data to the RF band.

The reception processing section 1005 performs processes such as downconversion, digital conversion, and demodulation of the signal received via the antenna 1004 and further decodes the signal as a predetermined frame (e.g., MAC frame). The received frame analysis section 1006 analyzes the parameters included in the received frame.

Here, in a case where an ESS control information element has been added to the frame received from the access point, the received frame analysis section 1006 analyzes information included in the information element such as in-ESS position information and communication parameters and outputs acquired information to a control section 1007. It should be noted that the "frame," as it is called here, refers to a management frame such as beacon frame, association frame, probe frame, or action frame, or to a management frame or a data frame sent from the access point.

The control section 1007 manages the wireless network (BSS) and controls the exchange of information between the different sections within the wireless communication apparatus 1000 to function as a subordinate of the access point. The present embodiment is characterized in that the control section 1007 controls communication operation within the BSS of the access point with which the wireless communication apparatus 1000 is associated or switches the association to other access point on the basis of contents of the ESS control information element sent from the access point.

Specifically, the control section 1007 controls the transmission power from the antenna 100 or the antenna directivity on the basis of the content of the Transmit Power field or the Beam Control field or the ESS Shell flag or the ESS Yolk flag of the ESS control information element. For example, if the access point with which the wireless communication apparatus 1000 is associated is an ESS Yolk (central part), predetermined maximum transmission power may be set, and if the access point is an ESS shell (peripheral part), the transmission power is suppressed to ensure that no interference is caused to the systems outside the ESS.

Also, the control section 1007 specifies a transmission signal coding and modulation scheme to the transmission processing section 1003 on the basis of the content of the MCS field or the ESS Shell flag or the ESS Yolk flag of the ESS control information element. For example, if the access point with which the wireless communication apparatus 1000 is associated is an ESS Yolk (central part), there are no impacts of interference caused by external signals. Therefore, a coding and modulation scheme may be set that permits high-speed data communication. Alternatively, if the access point is an ESS shell (peripheral part), a coding and modulation scheme highly resistant to interference caused by external signals is set in consideration of impacts of the external signals.

Also, the control section 1007 estimates communication efficiency with respect to the access point with which the wireless communication apparatus 1000 is currently associated on the basis of the contents of the ESS Shell flag or the ESS Yolk flag and the MCS field of the ESS control information element and instructs the transmission frame creation section 1002 to switch the association to other access point. For example, the access point with which the wireless communication apparatus 1000 is associated and that is an ESS shell (peripheral part) is susceptible to interference caused by external signals, making the access point incapable of high-speed data communication. Therefore, the association is switched to other access point that is an ESS Yolk (central part).

FIG. 7 illustrates an example of a communication sequence within a BSS that participates in an ESS. We assume here a communication sequence for each of terminals STA1 and STA2 to change the access point with which the terminal is associated in a communication environment where the two access points AP1 and AP2 both participate in the same ESS and the terminals STA1 and STA2 are both located within communication-enabled ranges of the AP1 and the AP2 and in a case where the positional relation between the access points AP1 and AP2 changes within the ESS. It should be noted, however, that we assume that, in the communication sequence illustrated, the STA1 is associated with the AP1 and that the STA2 is associated with the AP2 when the communication sequence illustrated starts. It should be noted that we assume that the wireless communication apparatus illustrated, for example, in FIG. 4 or 5 is used as each of the access points and that the wireless communication apparatus illustrated, for example, in FIG. 10 is used as each of the terminals.

First, the AP1 makes a notification, with a beacon frame, to the peripheral terminals STA1 and STA2 that the AP1 is located at a central part of the ESS (ESS Yolk). Similarly, the AP2 also makes a notification, with a beacon frame, to the peripheral terminals STA1 and STA that the AP2 is located at a central part of the ESS (ESS Yolk).

Here, the STA1 is associated with the AP1. Therefore, the STA1 carries out high-speed data (High-Speed Data) communication with the AP1, for example, by using the communication resource assigned by the AP1.

When detecting that it is located at a peripheral part of the ESS (ESS Shell Detect) by detecting an external signal in such a communication condition, the AP1 changes a communication parameter within the BSS such as BSS transmission power or BSS antenna directivity (Parameter Change). At this time, there is a possibility that high-speed data communication may become difficult to carry out because of the change in transmission power or antenna directivity of the AP1. Then, the AP1 sends a beacon frame with an ESS control information element including the changed communication parameter.

On the other hand, the AP2 has yet to detect any external signals and, therefore, sends a beacon frame indicating that it continues to remain at a central part of the ESS (ESS Yolk).

The STA1 analyzes the contents of the ESS control information element that has been added to the beacon frame received from the AP1 and recognizes that high-speed data communication with the AP1 has become difficult to carry out. Also, the STA1 analyzes the contents of the ESS control information element that has been added to the beacon frame received from the AP2 and recognizes that high-speed data communication is possible with the AP2 that continues to remain at a central part of the ESS.

For this reason, the STA1 decides to switch the access point with which it is associated from the AP1 to the AP2 and performs control for changing the association.

The STA1 sends an association request (Association Request) to the AP2 first.

When the association request is received, the AP2 returns an association response (Association Response) if the STA1 can be accommodated.

When the association response is received from the AP2, the STA1 sends a disassociation request (Disassociation Request) to the AP1 this time. In response, the AP1 accepts the disassociation of the STA1 and returns a disassociation response (Disassociation Response) to the STA1. This completes the change to the access point associated with the STA1.

Thereafter, the STA1 changes the destination to which to send data from the AP1 to the AP2 and carries out high-speed data communication.

Also, the AP1 repeatedly sends a beacon frame including an ESS control information element indicating that the AP1 is located at a peripheral part of the ESS if no change has been made to the positional relation within the ESS.

Similarly, the AP2 repeatedly sends a beacon frame including an ESS control information element indicating that the AP2 is located at a central part of the ESS if no change has been made to the positional relation within the ESS.

FIG. 8 illustrates, in a flowchart form, a processing procedure for carrying out transmission power control at an access point. This processing procedure is carried out by the wireless communication apparatus 400 or 500 that functions as an access point, for example, in the wireless LAN system illustrated in FIG. 1.

First, the access point checks whether or not it is an access point within an extended service set (ESS) (step S801). Here, in a case where the access point is not an access point within the ESS (No in step S801), the access point skips the subsequent processing steps and sends a beacon frame when predetermined time comes to do so (step S807). There is no need to add an ESS control information element to the beacon frame sent here.

In a case where the access point is an access point within the ESS (Yes in step S801), an attempt is made next to detect external signals (step S802).

External signals, as the term is used here, include signals from positioning satellites such as GPS, signals from base stations of public communication networks such as mobile phone network, signals from radio and television broadcasting stations, signals from radar and other equipment, signals from access points not belonging to the extended service set (ESS) to which the access point belongs or transmission signals to these APs, signals from apparatuses that emit signals in the same frequency band as wireless LAN systems, and so on. It should be noted, however, that there is no need to decode all detected signals in step S802 and that it is sufficient if signal levels can be detected in the frequency channel used by the access point itself for signal transmission.

Then, the access point checks whether or not the received power of the detected external signal is equal to or greater than a predetermined level (step S803).

In a case where the received power of the detected external signal is equal to or greater than the predetermined level (Yes in step S803), the access point determines that it is located at a peripheral part of the ESS (step S804) and sets, in that case, the BSS transmission power to a level that will not cause any interference to the systems outside the ESS (step S805). Also, a coding and modulation scheme more resistant to interference caused by external signals (i.e., permissible MCS range) may be set concurrently with setting of transmission power.

Then, the access point prepares an ESS control information element to function as an ESS shell on the basis of the determination and the setting made in the above processing steps S804 and S805 (step S806).

On the other hand, in a case where no external signal equal to or greater than the predetermined level has been detected (No in step S803), the access point determines that it is located at a central part of the ESS (step S808). In this case, the access point may set its transmission power to the predetermined maximum level (step S809). Also, the access point may set its coding and modulation scheme to the one that permits high-speed data communication (i.e., set a permissible MCS range) because it is not subject to interference caused by external signals. Then, the access point prepares an ESS control information element to function as an ESS Yolk (step S810).

Then, when predetermined time comes to send a beacon, the access point adds the ESS control information element prepared in processing step S806 or S809 and sends the beacon frame (step S807).

FIG. 9 illustrates, in a flowchart form, a processing procedure for an access point to carry out transmission power control and antenna directivity control. This processing procedure is carried out by the wireless communication apparatus 400 or 500 that functions as an access point, for example, in the wireless LAN system illustrated in FIG. 1.

First, the access point checks whether or not it is an access point within an extended service set (ESS) (step S901). Here, in a case where the access point is not an access point within the ESS (No in step S901), the access point skips the subsequent processing steps and sends a beacon frame when predetermined time comes to do so (step S917). There is no need to add an ESS control information element to the beacon frame sent here.

In a case where the access point is an access point within the ESS (Yes in step S901), an attempt is made next to detect external signals by adjusting the antenna directivity to a certain detection direction (step S902).

External signals, as the term is used here, include signals from positioning satellites such as GPS, signals from base stations of public communication networks such as mobile phone network, signals from radio and television broadcasting stations, signals from radar and other equipment, signals from access points not belonging to the extended service set (ESS) to which the access point belongs or transmission signals to these APs, signals from apparatuses that emit signals in the same frequency band as wireless LAN systems, and so on. It should be noted, however, that there is no need to decode all detected signals in step S902 and that it is sufficient if signal levels can be detected in the frequency channel used by the access point itself for signal transmission.

Then, the access point checks whether or not the received power of an external signal in the current detection direction is equal to or greater than a predetermined level (step S903).

In a case where the received power of the external signal is equal to or greater than the predetermined level (Yes in step S903), the access point stores the detection direction and the received power level (step S904). Then, when predetermined detection time elapses (Yes in step S905), the access point changes the detection direction (step S906). In a case where no external signals have yet to be detected in that detection direction (No in step S907), the access point returns to step S902 and repeats the external signal detection operation.

When the external signal detection operation is complete in all directions (Yes in step S907), the access point checks next whether or not an external signal has been detected in any of the directions (step S908). Then, in a case where no external signal equal to or greater than the predetermined level has been detected (Yes in step S908), the access point determines that it is located at a central part of the ESS (step S909). In this case, the access point may set its transmission power to the predetermined maximum level. Also, the access point may set its coding and modulation scheme to the one that permits high-speed data communication (i.e., set a permissible MCS range) because it is not subject to interference caused by external signals. Then, the access point prepares an ESS control information element to function as an ESS Yolk (step S910).

On the other hand, in a case where an external signal equal to or greater than the predetermined level has been detected in any of the directions (No in step S908), the access point determines that it is located at a peripheral part of the ESS (step S911).

In this case, the access point identifies an azimuth with minimal impacts caused by external signals on the basis of the detection direction and the received power level of the external signal stored in step S904 (step S912). Then, the access point calculates a permissible transmission power level (step S913), controls the BSS transmission directivity (step S914), and sets the BSS transmission power to a level that will not cause any interference to the systems outside the ESS (step S915). Also, a coding and modulation scheme more resistant to interference caused by external signals (i.e., permissible MCS range) may be set concurrently with setting of transmission power.

Then, the access point prepares an ESS control information element to function as an ESS shell on the basis of the determination and the setting made in the above processing steps 914 and 915 (step S916).

Then, when predetermined time comes to send a beacon, the access point adds the ESS control information element prepared in processing step S910 or S916 and sends the beacon frame (step S917).

As described above, the technology disclosed in the present specification allows for an access point to determine its position within an ESS on the basis of detection statuses of the external signals when the ESS group is formed together with BSSes that include other access points, and control parameters such as transmission power, coding and modulation scheme, and transmission direction in accordance with the position.

Among examples of external signals, as the term is used here, are signals from positioning satellites such as GPS, signals from base stations of public communication networks such as mobile phone network, signals from radio and television broadcasting stations, signals from radar and other equipment, signals from access points not belonging to the extended service set (ESS) to which the access point belongs or transmission signals to these APs, and signals from apparatuses that emit signals in the same frequency band as wireless LAN systems.

In a case where the access point determines, indoors where an ESS is in place, that it is located at a peripheral part of the ESS because of an attenuated reception intensity of an external signal, the access point can avoid secure data exchange by suppressing its transmission power, restricting its transmission direction, and employing a high error-resilient coding and modulation scheme in such a manner as not to cause interference to the systems outside the ESS.

### [Industrial Applicability]

A detailed description has been given above of the technology disclosed in the present specification with reference to specific embodiments. However, it is apparent that a person skilled in the art can modify or substitute the embodiments in question without departing from the gist of the technology disclosed in the present specification.

The technology disclosed in the present specification is applicable, for example, to a wireless network based on the IEEE802.11 standard. It should be noted, however, that the scope of application of the technology disclosed in the present specification is not limited to a specific communication standard. In a case where an ESS including a plurality of BSSes is formed, the access point can, by applying the technology disclosed in the present specification, determine the position of its own BSS within the ESS, and avoid secure data exchange by suppressing its transmission power, restricting its transmission direction, and employing an high error-resilient coding and modulation scheme in such a manner as not to cause interference to the systems outside the ESS. Also, the access point can make a notification of, to its terminals, information regarding the position of its own BSS within the ESS and communication parameters set on the basis of the position. The terminals can properly determine whether or not to switch the association to other access point on the basis of the notification sent from the access point with which it is associated.

In short, the technology disclosed in the present specification has been described by way of illustration, and the description of the present specification should not be interpreted restrictively. In order to evaluate the gist of the technology disclosed in the present specification, the claims should be taken into consideration.

It should be noted that the technology disclosed in the preset specification can also have the following configurations.
(1) A communication apparatus including:
   a communication section adapted to send and receive signals;
   a control section adapted to control transmission and reception of the signals;
   a detection section adapted to detect external signals; and
   a determination section adapted to determine a position in an extended service set on the basis of detection results of the external signals, in which
   the control section controls setting of communication parameters in its own basic service set on the basis of the determined position.
(2) The communication apparatus according to (1), in which
   the detection section detects, as the external signal, at least one of a signal from a positioning satellite, a signal from a base station of a public communication network, a radio or television broadcasting signal, a signal from a communication apparatus not belonging to the extended service set, or a signal from an apparatus that emits signals in the same frequency band as wireless LAN systems.
(3) The communication apparatus according to (1) or (2), in which
   the control section controls notification of position information of the communication apparatus itself within the extended service set and the communication parameters to other communication apparatuses.
(4) The communication apparatus according to any one of (1) to (3), in which
   the determination section determines whether or not the communication apparatus is located at a central or peripheral part of the extended service set.
(5) The communication apparatus according to any one of (1) to (4), in which
   the control section controls transmission power of the basic service set in accordance with the position of the communication apparatus itself within the extended service set.
(6) The communication apparatus according to any one of (1) to (5), in which
   the control section further determines a direction of arrival of the external signal.
(7) The communication apparatus according to any one of (1) to (6), in which
   the control section controls transmission directivity of the basic service set in accordance with the position of the communication apparatus within the extended service set.
(8) The communication apparatus according to any one of (1) to (7), in which
   the control section determines a coding scheme or a modulation scheme used for the basic service set in accordance with the position of the communication apparatus within the extended service set.
(9) The communication apparatus according to any one of (1) to (8) making a notification, to other communication apparatus, of at least one piece of information from among position information of the communication apparatus itself within the extended service set, or the transmission power, the transmission directivity, or the coding scheme or the modulation scheme in the basic service set.
(10) The communication apparatus according to any one of (1) to (9) functioning as an access point.
(11) A communication method including:
   a detection step of detecting external signals;
   a determination step of determining a position in an extended service set on the basis of detection results of the external signals; and
   a step of controlling setting of communication parameters in its own basic service set on the basis of the determined position.
(12) A communication apparatus including:
   a communication section adapted to send and receive signals to and from an access point;
   an extraction section adapted to extract, from the signal received from the access point, information regarding an extended service set in which the access point participates; and
   a control section adapted to control transmission and reception of the signals by the communication section on the basis of the extracted information.
(13) The communication apparatus according to (12), in which
   the extraction section extracts, from the signal received from the access point, position information of the access point in the extended service set and information regarding communication parameters.
(14) The communication apparatus according to (12) or (13), in which
   the extraction section extracts, from the signal received from the access point, information regarding at least one of the transmission power, the transmission directivity, or the coding scheme or the modulation scheme within the basic service set of the access point.
(15) The communication apparatus according to (13), in which
   the control section controls selection of a destination for association on the basis of the position information of the access point in the extended service set.
(16) The communication apparatus according to any one of (13) to (15), in which
   the control section controls the transmission power on the basis of the position information of the access point in the extended service set.
(17) The communication apparatus according to any one of (13), (15), or (16), in which
   the control section controls the coding scheme or the modulation scheme on the basis of the position information of the access point in the extended service set.
(18) A communication method including:
   a reception step of receiving signals from an access point;
   an extraction step of extracting, from the signal received from the access point, information regarding an extended service set in which the access point participates; and
   a control step of controlling transmission and reception of the signals on the basis of the extracted information.

### [Reference Signs List]

400 ··· Wireless communication apparatus, 401 ··· Communication interface
402 ··· Transmission buffer, 403 ··· Transmission frame creation section
404 ··· Transmission processing section, 405 ··· Antenna, 406 ··· Reception processing section
407 ··· Received frame analysis section, 408 ··· Reception buffer
411 ··· External signal detection section, 412 ··· In-ESS position determination section
413 ··· Network management section, 414 ··· Power control section
500 ··· Wireless communication apparatus, 501 ··· Communication interface
502 ··· Transmission buffer, 503 ··· Transmission frame creation section
504 ··· Transmission processing section, 505 ··· Antenna, 506 ··· Reception processing section
507 ··· Received frame analysis section, 508 ··· Reception buffer
511 ··· External signal antennas, 512 ··· External signal detection section
513 ··· In-ESS position determination section, 514 ··· Network management section
515 ··· Power control section, 516 ··· Directivity control section
1000 ··· Wireless communication apparatus, 1001 ··· Data processing section
1002 ··· Transmission frame creation section, 1003 ··· Transmission processing section
1004 ··· Antenna, 1005 ··· Reception processing section
1006 ··· Received frame analysis section, 1007 ··· Control section

## Claims

1. A communication apparatus comprising:
a communication section adapted to send and receive signals;
a control section adapted to control transmission and reception of the signals;
a detection section adapted to detect external signals; and
a determination section adapted to determine a position in an extended service set on a basis of detection results of the external signals, wherein
the control section controls setting of communication parameters in its own basic service set on a basis of the determined position.

2. The communication apparatus according to claim 1, wherein
the detection section detects, as the external signal, at least one of a signal from a positioning satellite, a signal from a base station of a public communication network, a radio or television broadcasting signal, a signal from a communication apparatus not belonging to the extended service set, or a signal from an apparatus that emits signals in the same frequency band as wireless LAN systems.

3. The communication apparatus according to claim 1, wherein
the control section controls notification of position information of the communication apparatus itself within the extended service set and the communication parameters to other communication apparatuses.

4. The communication apparatus according to claim 1, wherein
the determination section determines whether or not the communication apparatus is located at a central or peripheral part of the extended service set.

5. The communication apparatus according to claim 1, wherein
the control section controls transmission power of the basic service set in accordance with the position of the communication apparatus itself within the extended service set.

6. The communication apparatus according to claim 1, wherein
the determination section further determines a direction of arrival of the external signal.

7. The communication apparatus according to claim 1, wherein
the control section controls transmission directivity of the basic service set in accordance with the position of the communication apparatus within the extended service set.

8. The communication apparatus according to claim 1, wherein
the control section determines a coding scheme or a modulation scheme used for the basic service set in accordance with the position of the communication apparatus within the extended service set.

9. The communication apparatus according to claim 1 making a notification, to other communication apparatus, of at least one piece of information from among position information of the communication apparatus itself within the extended service set, or the transmission power, the transmission directivity, or the coding scheme or the modulation scheme in the basic service set.

10. The communication apparatus according to claim 1 functioning as an access point.

11. A communication method comprising:
a detection step of detecting external signals;
a determination step of determining a position in an extended service set on a basis of detection results of the external signals; and
a step of controlling setting of communication parameters in its own basic service set on a basis of the determined position.

12. A communication apparatus comprising:
a communication section adapted to send and receive signals to and from an access point;
an extraction section adapted to extract, from the signal received from the access point, information regarding an extended service set in which the access point participates; and
a control section adapted to control transmission and reception of the signals by the communication section on a basis of the extracted information.

13. The communication apparatus according to claim 12, wherein
the extraction section extracts, from the signal received from the access point, position information of the access point in the extended service set and information regarding communication parameters.

14. The communication apparatus according to claim 12, wherein
the extraction section extracts, from the signal received from the access point, information regarding at least one of the transmission power, the transmission directivity, or the coding scheme or the modulation scheme within the basic service set of the access point.

15. The communication apparatus according to claim 13, wherein
the control section controls selection of a destination for association on a basis of the position information of the access point in the extended service set.

16. The communication apparatus according to claim 13, wherein
the control section controls the transmission power on a basis of the position information of the access point in the extended service set.

17. The communication apparatus according to claim 13, wherein
the control section controls the coding scheme or the modulation scheme on a basis of the position information of the access point in the extended service set.

18. A communication method comprising:
a reception step of receiving signals from an access point;
an extraction step of extracting, from the signal received from the access point, information regarding an extended service set in which the access point participates; and
a control step of controlling transmission and reception of the signals on a basis of the extracted information.
